# EUROPÄISCHE PATENTSCHRIFT

(11) **EP 3 480 553 B1**
(45) Veröffentlichungstag und Bekanntmachung des Hinweises auf die Patenterteilung: **15.09.2021**
(21) Anmeldenummer: 18204388.5
(22) Anmeldetag: 05.11.2018
(51) Int. Cl.: G01B 11/02, G01B 11/06, G01B 11/16, G01N 21/3581, G01B 11/27, G01B 11/245, G01N 21/954

(54) **TERAHERTZ-MESSVERFAHREN UND TERAHERTZ-MESSVORRICHTUNG ZUM MESSEN MINDESTENS EINER WANDDICKE EINES ROHRFÖRMIGEN MESSOBJEKTES**
TERAHERTZ MEASURING APPARATUS AND METHOD FOR MEASURING AT LEAST ONE WALL THICKNESS OF A TUBULAR OBJECT TO BE MEASURED
DISPOSITIF ET PROCÉDÉ DE MESURE DE SIGNAUX TÉRAHERTZ DESTINÉS À MESURER AU MOINS UNE ÉPAISSEUR DE PAROI D'UN OBJET TUBULAIRE À MESURER

(30) Priorität: 03.11.2017 DE 102017125753
(43) Veröffentlichungstag der Anmeldung: 08.05.2019
(73) Patentinhaber: iNOEX GmbH Innovationen und Ausrüstungen für die Extrusionstechnik, 49324 Melle (DE)
(72) Erfinder: Neumeister, Arno, 32457 Porta Westfalica (DE)
(74) Vertreter: Bremer, Ulrich

(56) Entgegenhaltungen:
- DE-A1- 19 852 335
- DE-A1-102015 122 205
- DE-A1-102016 105 599
- DE-B3-102014 005 651
- US-A1- 2016 003 734

## Beschreibung

Die Erfindung betrifft ein Terahertz-Messverfahren und eine Terahertz-Messvorrichtung zum Messen mindestens einer Wanddicke eines rohrförmigen Messobjektes, insbesondere eines Rohrs aus einem Kunststoffmaterial.

Terahertz-Messverfahren werden u. a. eingesetzt, um extrudierte Rohre direkt nach ihrer Herstellung zu vermessen. Ein THz-Sensor ist außerhalb des geförderten Rohres angeordnet und senkrecht auf die Rohrachse gerichtet. Die entlang der optischen Achse eingestrahlte THz-Strahlung wird an den Grenzflächen des Rohres teilweise reflektiert, so dass sie bei senkrechtem Einfall entlang der optischen Achse zurück reflektiert wird und in der aufgenommenen Signalamplitude als Reflexionspeak detektiert werden kann. Bei der Vermessung eines z. B. einschichtigen Kunststoff-Rohres wird die THz-Strahlung somit zunächst an einer Außenfläche, dann an einer Innenfläche, und nach Durchqueren des Rohrinnenraums wiederum an einer Innenfläche beim Eintritt in das Kunststoffmaterial und nachfolgend an der Außenfläche teilweise reflektiert. Die Schichtdicken können als Laufzeitmessungen der THz-Strahlung ermittelt werden, z.B. direkt als Messung über die Zeit oder bei Frequenzmodulation auch als Messung über die Frequenz. Somit können bei der Extrusion eines Rohres die Wanddicke und der Innendurchmesser auf vorschriftsmäßige Werte überprüft werden. Bei Einsatz eines einzigen Sensors kann dieser fortlaufend um das Messobjekt herum geschwenkt werden, z. B. mit 30 Umdrehungen pro Minute, so dass ein Rohr nach seiner Extrusion direkt vollumfänglich vermessen werden kann.

Es zeigt sich jedoch, dass insbesondere an extrudierten Rohren derartige THz-Vermessungen nicht unproblematisch sind und zum Teil einige Flächen, insbesondere die Innenfläche, nicht oder nicht vollständig erfasst werden können. So kann insbesondere ein Sagging-Effekt, d.h. eine Veränderung der lokalen Wanddicke direkt nach der Extrusion durch Fließen des noch warmen Extrusionsmaterials auftreten, der nur ungenau detektiert werden kann und bis zu einem gewissen Maß zulässig ist.

Die WO 2016/139155 A1 schlägt hierzu vor, mehrere Paare aus Sendern und Empfängern um des Messobjekt herum rotieren zu lassen und die Terahertz-Strahlung auf die Längsachse des Messobjektes, d.h. z.B. die Rohrachse, zu fokussieren, um Änderungen der Wanddicke und ein Sagging zu ermitteln. Auch derartige Messungen sind aber ungenau, da für Grenzflächen, die nicht senkrecht zur einfallenden Strahlung verlaufen, im Allgemeinen keine Reflexionspeaks ermittelt werden können.

Weiterhin sind THz-Messverfahren bekannt, um Fehlstellen bzw. Lunker in dem Material zu detektieren. Hierbei können somit senkrecht zurück reflektierte Reflexionen durch zusätzliche Reflexionspeaks im Mess-Signal detektiert werden.

DE 10 2015 122 205 A1 beschreibt ein THZ-Messverfahren und eine THz-Messvorrichtung zum Ermitteln einer Schichtdicke oder eines Abstandes eines Messobjektes, wobei THz-Strahlung eingestrahlt wird und ein Messsignal der reflektierten THz-Strahlung detektiert und ausgewertet wird, um eine Schichtdicke zu ermitteln. Hierbei ist vorgesehen mehrere Messungen mit unterschiedlichen optischen Achsen durchzuführen, wobei die optische Achse der ausgesandten THz-Strahlung während der Messung oder zwischen den Messsignalen verstellt wird und eine oder mehrere Messungen zur Ermittlung der Schichtdicke herangezogen werden.

Die DE 10 2016 105 599 A1 beschreibt eine THz-Messvorrichtung zum Vermessen eines Prüfobjektes, bei der THz-Strahlung in einem Abstrahl- Raumwinkel entlang einer optischen Achse, insbesondere unter Ausblendung eines Kernbereichs, ausgestrahlt wird und reflektierte THz-Strahlung detektiert wird.

Der Erfindung liegt die Aufgabe zugrunde, ein THz-Messverfahren und eine THz-Messvorrichtung zur Messung einer Wanddicke eines Messobjektes, insbesondere eines extrudierten Rohres zu schaffen, die mit relativ geringem Aufwand genaue Messungen auch nicht-idealer Effekte ermöglichen.

Diese Aufgabe wird durch ein THz-Messverfahren und eine THz-Messvorrichtung nach den unabhängigen Ansprüchen gelöst. Die Unteransprüche beschreiben bevorzugte Weiterbildungen. Weiterhin ist eine Messanordnung aus der THz-Messvorrichtung und dem rohrförmigen Messobjekt vorgesehen.

Das erfindungsgemäße THz-Messverfahren kann insbesondere mit einer erfindungsgemäßen THz-Messvorrichtung durchgeführt werden. Die erfindungsgemäße THz-Messvorrichtung und/oder die Messanordnung sind insbesondere auch zur Durchführung eines erfindungsgemäßen THz-Messverfahrens geeignet.

Somit wird ein THz-Hauptsensor durch die Symmetrieachse gerichtet und detektiert zumindest einen Wandbereich des rohrförmigen Messobjektes, d.h. in üblicher Weise die Außenfläche und die Innenfläche, die jeweils in der Signalamplitude einen Reflexionspeak erzeugen. Wenn an einer Messposition des THz-Hauptsensors zwar in einem Wandbereich der Reflexionspeak der Außenfläche, nicht aber der Reflexionspeak an der Innenfläche detektiert wird, kann zunächst eine Verformung der Innenfläche vorliegen, die z.B. ein Sagging bzw. eine Ovalität sein kann. Bei Erfassung eines vorderen und hinteren Wandbereichs (d.h. insbesondere Durchstrahlen bzw. Durchleuchten beider Messbereiche bzw. des ganzen Messobjektes) kann somit insbesondere lediglich ein einziger Reflexionspeak an einer Innenfläche detektiert werden, d.h. von dem anderen Wandbereich kein entsprechender Reflexionspeak der Innenfläche.

Der Erfindung liegt die Erkenntnis zugrunde, dass eine innere Wanddicken-Verformung, d.h. eine Ausbildung der Innenfläche, die von einer konzentrisch runden Anordnung abweicht, mittels eines Zusatz-Sensors erkannt werden kann, der gegenüber dem Haupt-Sensor um einen Sensorwinkel verstellt ist. Eine Wanddicken-Verformung stellt somit eine Verformung und/oder Position der Innenfläche dar, bei der die Innenfläche zumindest bereichsweise keine zu der Außenfläche konzentrische, runde Fläche ausbildet. Die Wandddicken-Verformung kann z.B. ein Sagging sein, bei dem Material sich in einem unteren Bereich gesammelt hat, oder auch allgemein eine Exzentrizität, bei der die Innenfläche z.B. rund, aber nicht konzentrisch zur Außenfläche ist, oder z.B. auch eine Ovalität, bei der somit die Innenfläche oval ausgebildet ist.

Bei einem Sagging fließt das noch warme Material unter Einfluss der Schwerkraft nach unten, so dass sich die Innenfläche an dem unteren oder auch unteren seitlichen Bereich abflacht und zumindest bereichsweise nicht mehr senkrecht auf dem Radius steht. Somit steht auch die optische Achse des herkömmlichen THz-Senders, der mit seiner ersten optischen Achse auf die Symmetrieachse des Messobjektes bzw. der Messvorrichtung gerichtet ist, nicht mehr senkrecht auf der Sagging-Fläche, so dass die THZ-Strahlung nicht senkrecht reflektiert wird, so dass der THz-Detektor oder THz-Transceiver kein Reflexionssignal detektiert.

Erfindungsgemäß ist zusätzlich zu dem Haupt-Sensor mindestens ein Zusatz-Sensor vorgesehen, dessen zweite optische Achse gegenüber der erste Achse um einen Sensorwinkel verstellt ist, so dass er im Allgemeinen ordnungsgemäße Reflexionen an den Grenzflächen nicht detektieren wird. Der Zusatzsensor wird daher in seinen meisten Stellungen kein Reflexionssignal liefern; beim Umkreisen um das Messobjekt wird der Zusatzsensor jedoch aufgrund der Schrägstellung bzw. Fehlausrichtung seiner zweiten optischen Achse in zumindest einer Stellung einen Reflexionspeak an einer verformten Innenfläche, z.B. Sagging-Fläche ermitteln, da derartige verformte Innenflächen, z.B. Sagging-Flächen, einen z.B. abgeflachten, aber stetigen Verlauf aufweisen. Der vorzugsweise mit dem Haupt-Sensor umlaufende Zusatz-Sensor wird somit in zumindest einer Messposition mit seiner zweiten optischen Achse hinreichend senkrecht auf der verformten Innenfläche - stehen, so dass ein Reflexionspeak detektiert werden kann.

Somit kann eine für den Haupt-Sensor und Zusatz-Sensor vorgesehene gemeinsame Auswerte- und Steuereinrichtung erkennen, dass hier ein oder mehrere zusätzliche, nicht ordnungsgemäße Reflexionspeak(s) vorliegt, der oder die direkt einer verformten Innenfläche zugeordnet werden kann bzw. können. Hierbei kann die Auswerte- und Steuereinrichtung die Signale des Haupt-Sensors und des Zusatzsensors vergleichen und beim Haupt-Sensor das Fehlen eines Reflexionspeaks einer Innenfläche erkennen. Insbesondere kann erkannt werden, dass
- ein Wandbereich, insbesondere der vordere Wandbereich, eine ordnungsgemäße Reflexion des Hauptstrahls des Haupt-Sensors an seiner Außenfläche aufweist, jedoch nicht an seiner Innenfläche,
- die Innenfläche aber einen Reflexionspeak des Zusatzstrahls liefert; dieser Reflexionspeak des Zusatzstrahls entspricht keiner ordnungsgemäßen Reflexion und kann daher der verformten Innenfläche zugeordnet werden.

Somit kann ein verformte Innenfläche erkannt werden, wenn bei einem durch die Symmetrieachse der Messvorrichtung bzw. Rohrachse gerichteten Hauptstrahl und einem nicht durch die Symmetrieachse gerichteten Zusatzstrahl:
- von einem Wandbereich ein Reflexionspeak des Hauptstrahls an der ordnungsgemäßen Außenfläche, aber kein Reflexionspeak des Hauptstrahls an der Innenfläche des Wandbereichs vorliegt
- weiterhin ein zusätzlicher Reflexionspeak des Zusatzstrahls an einer Innenfläche des Wandbereichs vorliegt.

Vorzugsweise können Reflexionen an Innenflächen und Außenflächen an der Form des THz-Signalpeaks unterschieden werden, da die Übergänge vom Material (z.B. Kunststoff mit z.B. einem Brechungsindex von etwa 1,5, aber auch z.B. Papier) zu Luft (Brechungsindex 1) eine andere Signalform als umgekehrt von Luft in das Material aufweisen. Bei derartigen Messungen wird im Allgemeinen eine Wanddicke als Abstand der Außen- und Innenfläche aus den beiden Signalpeaks ermittelt.

Somit unterscheidet sich die Signalform bei einem Eintritt in das Material des Messobjektes, d.h. vom Außenraum in die Außenfläche des vorderen Wandbereichs und vom Innenraum in die Innenfläche des hinteren Wandbereichs, deutlich von der Signalamplitude eines Reflexionspeaks beim Austritt aus dem Material des Messobjektes, d.h. vom vorderen Wandbereich durch die Innenfläche in den Innenraum bzw. vom hinteren Wandbereich durch die Außenfläche in den Außenraum.

Bei den Untersuchungen kann z.B. nur ein Wandbereich, insbesondere ein vorderer Wandbereich untersucht werden, der somit bei einer THz-Vermessung jeweils einen Signalpeak an der Außen- und Innenfläche liefert. Weiterhin kann aber auch der vordere und hintere Wandbereich in einer Messung erfasst werden, so dass dann in dem Messsignal bei ordnungsgemäß Flächen vier Signalpeaks vorliegen. Hierbei kann aus der Laufzeit erkannt werden, welcher Wandbereich den jeweiligen Signalpeak liefert, wobei die Messungen im Zeitraum oder auch (mit z.B. Frequenzmodulation) auch im Frequenzraum erfolgen können.

Die Symmetrieachse des Messobjektes entspricht insbesondere der Symmetrieachse der THz-Messvorrichtung. Die Symmetrieachse des Messobjektes entspricht insbesondere der Förderrichtung des Messobjektes, d.h. das Messobjekt wird in diese Richtung befördert. Vorzugsweise können der THz-Hauptsensor und der THz-Zusatzsensor auch um die Symmetrieachse rotieren, z.B. gemeinsam.

Grundsätzlich kann die Symmetrieachse des Messobjektes der Symmetrieachse der Messvorrichtung gleichgesetzt werden, d.h. direkt es wird für die erfindungsgemäße Messvorrichtung und das erfindungsgemäße Messverfahren die Symmetrieachse der Messvorrichtung herangezogen. Die Symmetrieachse kann insbesondere die Symmetrieachse einer Verstellvorrichtung zum Schwenken des Hauptsensors, gegebenenfalls auch des Zusatzsensors sein. Die Symmetrieachse entspricht insbesondere ohnehin der Förderrichtung und ist bekannt. Weiterhin ist es auch möglich, dass vorzugsweise aus der THz-Messung des Hauptsensors ein Mittelpunkt zwischen den Reflexionspeaks der beiden Außenflächen ermittelt wird, der somit jeweils die Symmetrieachse festlegt.

Eine Detektion einer Sagging-Fläche kann vorzugsweise auf Messungen in einem Messwinkelbereich um die genau vertikale Ausrichtung herum beschränkt werden, d.h. einen oberen oder unteren Bereich, da der Sagging-Effekt nur an der Unterseite vorliegen sollte. Neben einem Sagging kann aber auch z.B. eine Exzentrizität oder Ovalität detektiert werden, d.h. allgemein ein nicht-konzentrischer Verlauf von runden Grenzflächen; hierbei kann insbesondere ein stetiger Verlauf oder glatter stetiger Verlauf von nicht-konzentrischen Grenzflächen detektiert werden. Somit kann detektiert werden, ob die Innenfläche ordnungsgemäß eine konzentrische runde Innenfläche darstellt oder ihr Mittelpunkt versetzt ist bzw. sie nicht-rund ausgebildet ist.

Die Auswerte- und Steuereinrichtung kann somit insbesondere Abstandsmessungen durchführen, z.B. aus Laufzeitmessungen bzw. bei Frequenzmodulation aus Messungen im Frequenzraum, und zusätzlich die Wanddicken-verformung (Innenflächenverformung) detektieren. Somit können durch den Haupt-Sensor ordnungsgemäße Wanddicken ermittelt werden und es kann erkannt werden, wenn der Reflexionspeak der Innenfläche in einigen Bereichen fehlt.

Erfindungsgemäß kann somit mit relativ geringem Aufwand eine qualitative und vorzugsweise auch quantitative Erfassung einer verformten Innenfläche, z.B. eines Saggings ermöglicht werden. Es kann zum einen detektiert werden, dass ein erkennbares Sagging vorliegt; das z.B. bei dickeren Rohren toleriert werden kann, so dass durch die erfindungsgemäße Erfassung des Saggings auch unnötige Fehler-Erkennungen ausgeschlossen werden können, wenn das Sagging im zulässigen Toleranzbereich liegt.

Somit kann erfindungsgemäß insbesondere auch eine verformten Innenfläche, insbesondere ein grundsätzlich akzeptables (in einem ordnungsgemäßen Bereich liegendes) Sagging oder Exzentrizität oder Ovalität von einer Fehlstelle bzw. Lunker unterschieden werden. Wenn z.B. ein Fehlen eines Reflexionspeaks des Haupt-Sensors, aber kein zusätzlicher Reflexionspeak des Zusatzsensors an einer Innenfläche detektiert wird, liegt keine verformten Innenfläche wie z.B. Sagging (bzw. Exzentrizität oder Ovalität) vor und kann auf eine Fehlstelle entschieden werden.

Weiterhin kann eine stetige innere Wandverformung wie ein Sagging bzw. eine Exzentrizität oder Ovalität auch dadurch von Fehlstellen unterschieden werden, dass eine derartige verformte Innenfläche wie eine Exzentrizität, Ovalität oder Sagging über einen größeren Längsbereich (entlang der Symmetrieachse bzw. Förderrichtung des Messobjektes) auftritt.

Der THz-Zusatz-Sensor kann gemäß unterschiedlichen Ausführungsformen unterschiedlich eingestellt sein. So können ein oder mehr Zusatz-Sensoren vorgesehen sein, die gegenüber dem Haupt-Sensor verschwenkt werden. Somit kann der Haupt-Sensor mit dem Zusatz-Sensor gemeinsam um das Messobjekt kreisen, und die zweite optische Achse des Zusatz-Sensors hierbei gegenüber der ersten optischen Achse des Haupt-Sensors geschwenkt werden. So kann der Zusatz-Sensor z. B. bei jeder Umdrehung leicht gegenüber dem Haupt-Sensor verdreht bzw. gekippt werden. Statt den Zusatz-Sensor zu schwenken, kann hierbei auch der Zusatz-Sensor gegenüber dem Haupt-Sensor fest sein und ein nachgeschalteter Spiegel geschwenkt werden.

Gemäß einer Ausbildung der Erfindung weist die THz-Messvorrichtung eine von der Auswerte- und Steuereinrichtung angesteuerte relative Verstelleinrichtung zum Verstellen der zweiten optischen Achse des THz-Zusatz-sensors relativ zu der ersten optischen Achse des Haupt-Sensors in mehrere, vorzugsweise kontinuierlich geänderte variable Sensorwinkel auf.
Bei dem erfindungsgemäßen Verfahren wird der Sensorwinkel zwischen der zweiten optischen Achse und der ersten optischen Achse verstellt, vorzugsweise kontinuierlich geschwenkt.

Gemäß einer hierzu alternativen Ausbildung kann die zweite optische Achse des Zusatz-Sensors auch fest gegenüber der ersten optischen Achse des Haupt-Sensors angeordnet sein, d.h. die beiden Sensoren sind starr und mit festem Sensorwinkel (Winkelversatz) zueinander angeordnet. Somit wird der Zusatz-Sensor wiederum in einer geeigneten Messposition ein Reflexionssignal der Sagging-Fläche erhalten, wobei insbesondere in dieser Messposition der Haupt-Sensor an der unteren Innenfläche bzw. Sagging-Fläche kein entsprechendes Reflexionssignal erhalten wird.

Gemäß einer vorteilhaften Ausbildung der THz-Messvorrichtung und des erfindungsgemäßen Verfahrens ist die zweite optische Achse des mindestens einen THz-Zusatz-Sensors unter einem festen Sensorwinkel gegenüber der ersten optischen Achse des Haupt-Sensors eingestellt.

Bei der erfindungsgemäßen THz-Messvorrichtung und/oder dem erfindungsgemäßen Verfahren kann eine z.B. von einer Auswerte- und Steuereinrichtung angesteuerte Verstelleinrichtung zum gemeinsamen Schwenken der Sensoranordnung aus dem Haupt-Sensor und dem Zusatz-Sensor in mehrere Messwinkelpositionen vorgesehen sein, vorzugsweise zum vollumfänglichen Verstellen und/oder Verstellen in einer geschlossenen Umfangsbahn, insbesondere um das Messobjekt herum. So kann die Sensoranordnung insbesondere in einer Kreisbahn kontinuierlich um die Symmetrieachse der Messvorrichtung und/oder des Messobjektes geführt werden.

Weiterhin ist auch eine Ausbildung mit mehreren Zusatz-Sensoren möglich, insbesondere als Array bzw. ein- oder auch zweidimensionale Anordnung von Sensoren, die ein divergentes Bündel von THz-Strahlen aussenden. So kann z. B. eine THz-Array-Anordnung vorgesehen sein, bei der die divergente Anordnung der optischen Achsen durch eine konvexe Anordnung der Sensor-Chips erreicht wird. Die Messvorrichtung gibt somit ein divergentes Bündel von THz-Strahlen aus, von denen ein Strahl als Hauptstrahl die ordnungsgemäße Vermessung ermöglicht, und die weiteren Sensoren als Zusatz-Sensoren eine Detektion einer abgeflachten bzw. verformten oder deplatzierten Innenfläche bzw. Sagging-Fläche ermöglichen.

Auch sind erfindungsgemäß grundsätzlich Vermessungen in unterschiedlichen Richtungen bzw. Ebenen möglich. Zum einen kann eine Detektionsebene senkrecht zur Symmetrieachse oder Förderrichtung vermessen werden, d.h. die optischen Achsen (Haupt- und Zusatzachse) verlaufen in den Ebenen.

Weiterhin können die Haupt- und Zusatzachse bei der THz-Messvorrichtung und dem Verfahren aber auch entlang der Symmetrieachse oder Förderrichtung verstellt bzw. geneigt sein, d.h. insbesondere aus einer Detektionsebene heraus verlaufen, zur Vermessung entlang der Symmetrieachse oder in Förderrichtung und insbesondere entgegen der Förderrichtung, so dass Materialbereich erfasst werden die erst noch in die Detektionsebene gelangen, in denen der THz- Haupt-Sensor vorgesehen ist. Dies ist insbesondere auch bei anisotropen Fehlstellen wie z.B. Metallsplittern hilfreich, die somit auch mehreren Richtungen detektiert und erfasst werden können, wodurch die Wahrscheinlichkeit und Qualität der Erfassung deutlich gesteigert werden kann.

Gemäß einer erfindungsgemäßen Ausbildung verlaufen bei der THz-Messvorrichtung und/oder dem Verfahren die erste optische Achse des THz-Hauptstrahls und die zweite optische Achse des THz-Zusatz-Strahls zu der Symmetrieachse oder einer Förderrichtung geneigt oder schräg, insbesondere aus einer Detektionsebene heraus verlaufen, zur Vermessung entlang der Symmetrieachse und/oder in Förderrichtung und/oder entgegen der Förderrichtung.

Gemäß einer weiteren Ausbildung ist eine Aktiv-Passiv-Messung möglich, bei der ein Sensor aktiv THz-Strahlung sendet und die anderen Sensoren passiv empfangen, wobei vorzugsweise ein Synchronisationssignal zwischen der aktiven und den passiven Sensoren ausgegeben wird, das somit eine Laufzeitberechnung durch Synchronisation des Aussendezeitpunktes mit den Empfangszeitpunkten ermöglicht.

Hierdurch wird bereits der Vorteil erreicht, dass mit geringem apparativem Aufwand und relativ geringem Energieaufwand eine breitflächige Vermessung des Messobjektes bzw. Prüfobjektes ermöglicht wird, insbesondere auch mit geringer oder gar keiner mechanischen Verstellung der Einheiten. Es sind Messungen mit nicht-senkrechtem Einfall der THz-Strahlung an den Grenzflächen möglich, die große Bereiche des Messobjektes erfassen können.

Vorteilhafterweise zieht die passive Terahertz-Empfangseinheit bzw. die Auswerteeinheit zur Auswertung ergänzend gespeicherte Daten über eine geometrische Ausbildung, insbesondere relative geometrische Anordnungen der Position und Ausrichtung ihrer optischen Achse sowie der Position und Ausrichtung der optischen Achse der Terahertz-Sende- und Empfangseinheit hinzu. Derartige geometrische Daten können vorab durch Messung, insbesondere aber auch durch eine Kalibrierung an einem ersten Messobjekt festgelegt werden, sodass sie nachfolgend zur Auswertung herangezogen werden können.

Das Synchronisierungssignal zur Festlegung des Sendezeitpunktes, z. B. ein Triggerimpuls oder ein analoges Signal, z. B. Sägezahn-Signal, wird über eine Datenverbindung ausgegeben; es kann insbesondere direkt von der sendenden Terahertz-Sende- und Empfangseinheit ausgegeben werden, die somit insbesondere auch eine Master-Einheit darstellen kann, die das Synchronisierungssignal mit der Information über den Aussendezeitpunkt an die mindestens eine als Slave-Einheit dienende THz-Empfangseinheit ausgibt. Hierdurch ist insbesondere auch die Ausbildung eines modularen Systems, z. B. Bus-Systems, aus miteinander in Datenverbindung stehenden Einheiten möglich, das gegebenenfalls erweitert und stellenweist ausgetauscht werden kann. Alternativ hierzu ist auch ein zentrales System, z. B. sternförmig mit zentraler Steuereinheit, möglich. Die Datenverbindung kann über ein Kabel der auch drahtlos erfolgen.

Gemäß einer bevorzugten Ausbildung kann bei der Vielzahl mehrerer Einheiten jede Einheit zeitweise Terahertz-Sende- und Empfangseinheit sein, und somit zum Beispiel als Master-Einheit den Sendezeitpunkt für die anderen Einheiten festlegen, die jeweils passive Empfangseinheiten sind. So kann die Funktion der Master-Einheit bzw. sendenden Einheit jeweils durch wechseln. Hierdurch wird ein Vorteil einer sehr großflächigen Vermessung bei geringem Aufwand ermöglicht, da unterschiedliche Positionen und Ausrichtungen der sendenden optischen Achse bei jeweils mehreren ergänzend detektierenden optischen Achsen ermöglicht wird.

Somit sind mit geringem Aufwand breitflächige, insbesondere auch vollumfängliche Vermessungen möglich. Es kann ein breiter Aussendekegel der sendenden Einheit und breiter Empfangskegel der empfangenden Einheit genutzt werden, anders als bei nur direkte senkrechte Reflexionen detektierenden Systemen.

Die THz-Strahlung wird insbesondere im Frequenzbereich von 10 GHz bis 50 THz ausgegeben, wobei sie vollelektronisch oder auch optisch ausgegeben werden kann. Die Vermessung kann insbesondere direkt nach der Extrusion des Messobjektes erfolgen, wobei dann vorzugsweise die Verstellgeschwindigkeit bzw. Umlaufgeschwindigkeit der Sensoren um das Messobjekt größer ist als die Fördergeschwindigkeit des Messobjektes.

Die Erfindung wird im Folgenden anhand der beiliegenden Zeichnungen an einigen Ausführungsformen näher erläutert. Es zeigen:
- Fig. 1: herkömmliche Messungen an einem Rohr mit einer beispielhaften Sagging-Ausbildung;
- Fig. 2: eine THz-Messvorrichtung gemäß einer ersten Ausführungsform mit Haupt-Sensor und relativ zu diesem schwenkbaren Zusatzsensor an einem Rohr mit Sagging;
- Fig. 3: eine gegenüber Fig. 2 abgewandelte Ausführungsform mit schwenkbarem Spiegel;
- Fig. 4: eine Vermessung des Rohrs mit der THz- Messvorrichtung aus Fig. 2 in einer Messposition mit den Signalamplituden;
- Fig. 5: eine weitere Messposition der THz-Messvorrichtung aus Fig. 2 und 4;
- Fig. 6: eine THz-Messvorrichtung gemäß einer weiteren Ausführungsform mit zwei hintereinander angeordneten, rotierenden THz-Sensoren mit festem Sensorwinkel in einer ersten Messposition, in Querschnitt und Längsschnitt;
- Fig. 7: die Ausbildung von Fig. 6 in einer zweiten Messposition;
- Fig. 8: die Ausbildung von Fig. 6 und 7 in einer dritten Messposition;
- Fig. 9: eine THz-Messvorrichtung an einem Rohr mit Sagging gemäß einer dritten Ausführungsform mit einem divergenten Sensor-Array in einer ersten Messposition;
- Fig. 10: eine der Fig. 9 entsprechende Darstellung in einer zweiten Messposition;
- Fig. 11: eine der Fig. 9 entsprechende Darstellung bei Ausbildung eines Saggings an seitlichen Bereichen;
- Fig. 12: den Längsschnitt bzw. Schnitt entlang der Rohrachse aus Fig. 11;
- Fig. 13: eine perspektivische, geschnittene Ansicht der Ausbildung von Fig. 11, 12;
- Fig. 14: eine perspektivische Ansicht der Ausbildung von Fig. 11 bis 13;
- Fig. 15: eine Block-Darstellung der mehreren Sensoren bei einer Aktiv-Passiv-Messung;
- Fig. 16 - 20: Darstellungen entsprechend Fig. 1 bis 5 bei einem Rohr mit anderer Sagging-Ausbildung;
- Fig. 21, 22: Darstellungen entsprechend Fig. 9 und 10 bei Vermessung eines Rohrs mit seitlichen unteren Sagging-Bereichen entsprechend Fig. 11 bis 14 und Fig. 16 bis 20.

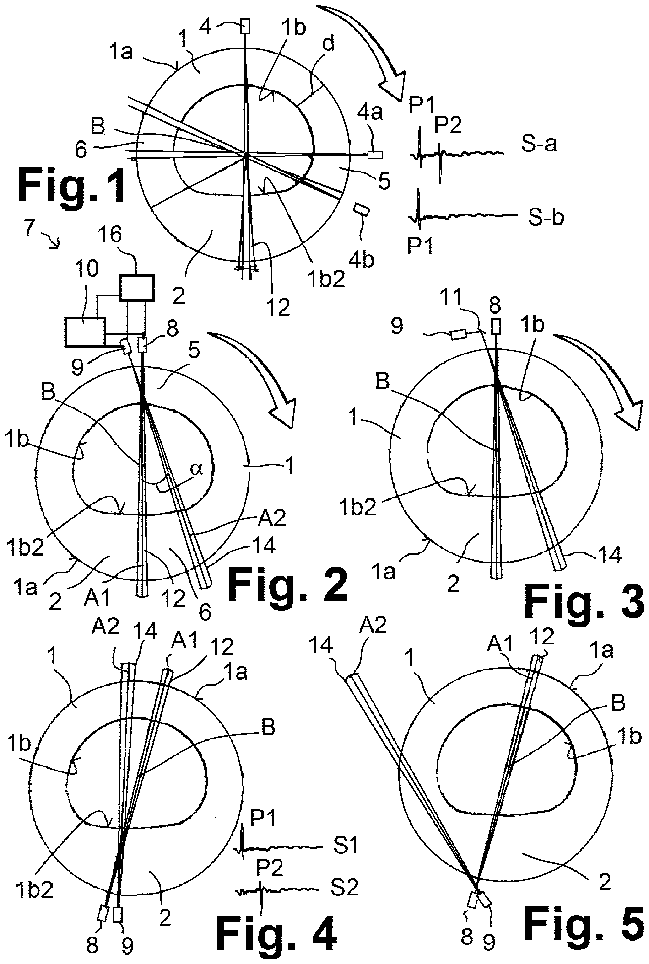

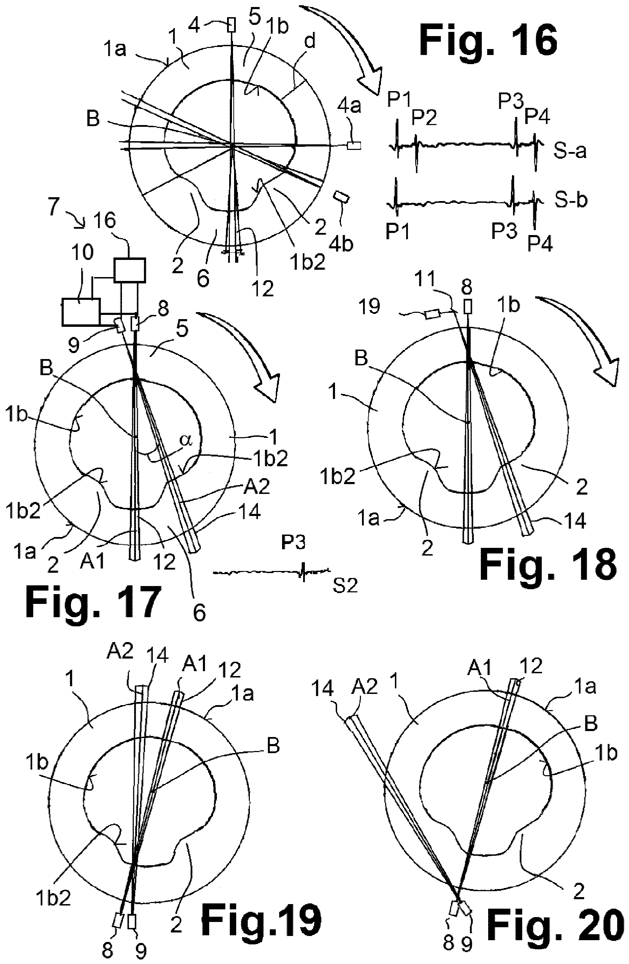

Fig. 1 zeigt als Messobjekt ein Rohr 1 mit einer Außenfläche 1a und einer Innenfläche 1b. Eine Wanddicke d verläuft über den Umfang nicht einheitlich, da das Rohr 1 in seiner unteren Hälfte einen Sagging-Bereich 2 mit größerer Wanddicke aufweist. Hierbei ist die Außenfläche 1a rund, jedoch die Innenfläche 1b in dem Sagging-Bereich 2 nicht rund bzw. abgeflacht. Ein derartiges Sagging tritt bei der Extrusion von Kunststoff-Rohren auf, wenn das flüssige Material sich stärker in dem unteren Bereich sammelt. Fig. 1 und 16 zeigen hierbei typische Sagging-Ausbildungen: bei Fig. 1 hat sich das flüssige Material in dem unteren Bereich gesammelt und den Sagging-Bereich 2 als eine Abflachung der Innenfläche 1b ausgebildet; in Fig. 16 ist das flüssige Material an den seitlichen Bereichen nach unten geflossen und hat seitliche untere Sagging-Bereiche 2 ausgebildet. Die nachfolgende Erläuterung erfolgt beispielhaft überwiegend an Fig. 1.

Gemäß Fig. 1 und 16 wird ein THz-Transceiver (THz-Sensor) 4, dessen optische Achse A durch die Rohrachse verläuft, um das Rohr 1 herumgefahren und vermisst somit in üblicher Weise die Wanddicke, wobei die vom THz-Transceiver 4 ausgegebene THz-Strahlung 12 mit einer ersten optischen Achse A1 beim Übergang von Medien mit unterschiedlichem Brechungsindex teilweise reflektiert wird. Somit erscheint in der oberen Stellung 4a eine ordnungsgemäße Signalamplitude S-a mit einem ersten Signalpeak P1 entsprechend dem Übergang des THz-Sendestrahls 12 von Luft in die Außenfläche 1a, d. h. in das optisch dichtere Material des Rohres 1, nachfolgend ein Signalpeak P2 beim Übergang von dem Material durch die Innenfläche 1a in die Luft oder Gas im Innenraum des Rohres 1. Hierbei kann zum einen nur ein vorderer Wandbereich 5 vermessen werden; weiterhin kann bei derartigen Messungen aber auch der hintere Wandbereich 6 des Rohres 1 vermessen werden, wie es beispielhaft in Fig. 16 gezeigt ist und auch auf Fig. 1 übertragen werden kann. Falls somit auch der hintere Wandbereich 6 vermessen wird, so ergeben sich nach Durchqueren des Innenraums des Rohres 1 entsprechend wiederum die Signalpeaks P3 und P4 der Fig. 16 beim senkrechten Durchstoßen des hinteren Wandbereichs 6.

In der unteren Stellung 4b der Fig. 1 und Fig. 16 liegt der THz-Transceiver 4 vor dem Sagging-Bereich 2, so dass die Innenfläche 1b unten nicht senkrecht zur optischen Achse A verläuft und daher kein Reflexionspeak zurückgesandt wird. Somit sind in der Signalamplitude S-b wiederum der erste Peak P1, weiterhin gegebenenfalls nach Fig. 16 auch die Peaks P3 und P4 von dem hinteren Wandbereich 6 zu detektieren, es fehlt jedoch der Peak P2 der Innenfläche 1b im Sagging-Bereich 2. Hier kann nicht erkannt werden, was für ein Fehler vorliegt.

Fig. 2 und Fig. 17 zeigen das Rohr 1 mit dem Sagging-Bereich 2 und einer THz-Messvorrichtung 7 gemäß einer Ausführungsform der Erfindung, die einen Haupt-Sensor 8, einen Zusatz-Sensor 9, eine Verstelleinrichtung 10 und eine Auswerte- und Steuereinrichtung 16 aufweist, wobei gemäß dieser Ausführungsform der Zusatz-Sensor 9 gegenüber dem Haupt-Sensor 8 mittels der Verstelleinrichtung 10 um eine Schwenkachse schwenkbar ist, die vorzugsweise parallel zur Rohrachse B verläuft. Die Sensoren 8, 9 werden um die Rohrachse B geschwenkt; der Haupt-Sensor 8 strahlt somit in den jeweiligen Messpositionen einen Hauptstrahl 12 entlang der ersten optischen Achse A1 senkrecht auf die Außenfläche 1a ein und detektiert eine erste Signalamplitude S1, wohingegen der Zusatz-Sensor 9 einen Zusatzstrahl 14 entlang einer zweiten optischen Achse A2 einstrahlt und eine zweite Signalamplitude S2 aufnimmt,
wobei der der Zusatz-Sensor 9 gegenüber dem Haupt-Sensor 8 um einen variablen Sensorwinkel α verschwenkt wird.

Der Zusatz-Sensor 9 ist mit seiner optischen Achse A2 somit im Allgemeinen nicht durch die Rohrachse B bzw. den Mittelpunkt des Querschnitts gerichtet, sondern hierzu versetzt; der Sensorwinkel α gegenüber dem Haupt-Sensor 8 wird bei jeder Umdrehung der Sensoranordnung 8, 9 etwas verdreht. Somit erreicht der Zusatz-Sensor 9 bei dem Rohr 1 in Fig. 4 eine Messposition, in der er senkrecht zur Innenfläche 1b des Sagging-Bereichs 2 d. h. der Sagging-Fläche 1b2, liegt und somit in seiner zweiten Signalamplitude S2 einen Reflexionspeak P2 liefert. Bei dem Rohr 1 mit seitlichem Sagging nach Fig. 16 ist dies z.B. in der Stellung der Fig. 17 erreicht, wobei hier der hintere Wandbereich 6 mit seiner Innenfläche senkrecht zu dem Zusatz-Strahl liegt. Da ein Sagging im Allgemeinen eine glatte, d.h. stetig differenzierbare Fläche ausbildet, ist zu erwarten, dass eine derartige Stellung des Zusatz-Sensors 9 mit senkrechter Lage der zweiten optischen Achse A2 auf der Sagging-Fläche einmal erreicht wird. Da der aktuelle Sensorwinkel α der Fig. 4 bekannt ist, und weiterhin auch der Abstand durch die Laufzeitmessung des Reflexionspeaks P2 bekannt ist, lässt sich somit die Rohrgeometrie sehr genau bestimmen, insbesondere auch die Ausbildung des Sagging-Bereichs 2. Fig. 5 und 20 zeigen eine weitere Messposition des Zusatz-Sensors 9 ohne Signalpeak.

Gemäß der Ausführungsform der Fig. 3 und 18 wird der schwenkbare Zusatz-Sensor durch einen festen Zusatz-Sensor 19 und einen schwenkbaren Verstell-Spiegel 11 realisiert, so dass bei dieser Ausführungsform der Zusatz-Sensor 10 fest bleibt und der Zusatz-Strahl 14 mit der zweiten optischen Achse A2 durch Schwenken des Verstell-Spiegels 11 relativ zum Haupt-Strahl 12 verstellt wird. Ansonsten entspricht die Ausführungsform der Fig. 3 und 18 derjenigen der Fig. 2 bzw. 17.

Somit wird in der Ausführungsform der Fig. 2, 4, 5 und entsprechend auch Fig. 3 - bzw. Fig. 17 bis 20 der Zusatzsensor 9 oder seine zweite optische Achse A2 bei jeder Umdrehung derartig gegenüber dem Haupt-Sensor 8 verstellt, dass sein Zusatz-Strahl 14 jeweils einen anderen variablen Sensorwinkel α aufweist.

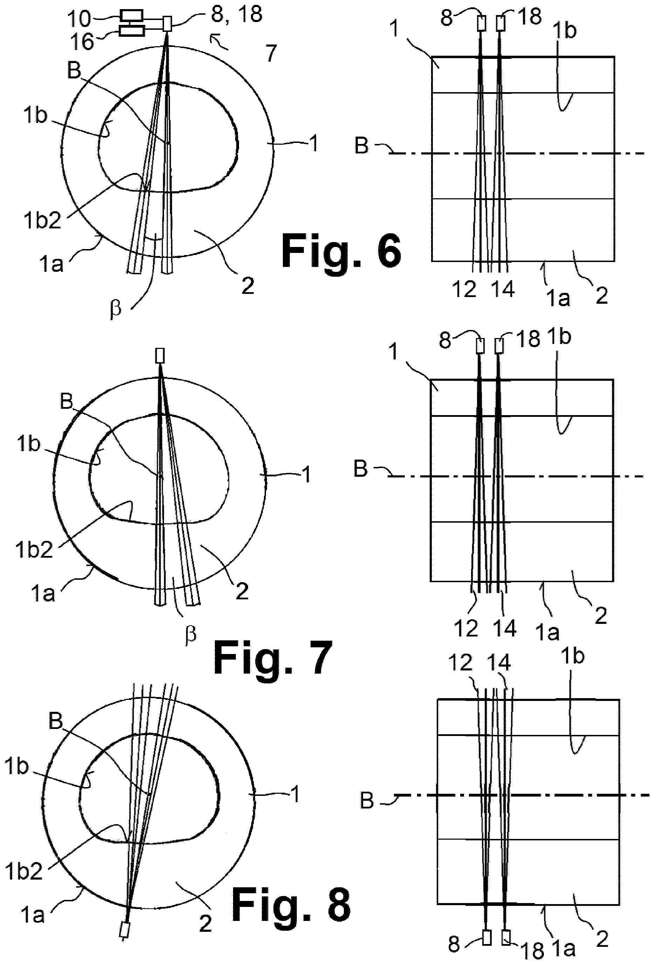

Bei der Ausführungsform der Fig. 6 bis 8 sind zwei THz-Sensoren (THz-Transceiver) 8 und 18 in axialer Richtung, d.h. Richtung der Rohrachse B beabstandet vorgesehen und rotieren um das Rohr 1, d.h. vorzugsweise um die Rohrachse B. Der - hier beispielhaft als vorderer - Sensor gezeigte Haupt-Sensor 8 ist mit seinem Hauptstrahl 12 durch die Rohrachse B und somit senkrecht zur Außenfläche 1a und zur Innenfläche 1b gerichtet; der hier axial dahinterliegende Zusatzsensor 18 ist mit seinem Zusatz-Strahl 14 gegenüber dem Hauptstrahl 12 um einen festen Sensorwinkel β verstellt, so dass der Zusatz-Strahl 14 im Allgemeinen nicht senkrecht auf den Flächen 1a und 1b aufliegt. Beim Umlaufen um das Rohr 1 wird jedoch gemäß Fig. 8 zeitweise jeweils eine Position erreicht, bei der der Zusatz-Strahl 14 senkrecht auf der Sagging-Fläche 1b2 aufliegt und somit hier einen weiteren Reflexionspeak, d.h. entsprechend dem Reflexionspeak P2 der Fig. 4, ausbildet. Diese Ausführungsform der Fig. 6 bis 8 kann entsprechend auch ein Rohr mit Sagging nach Fig. 16 bis 20 vermessen. Auch hier wird somit eine THz-Messvorrichtung 7 mit einer Auswerte- und Steuereinrichtung 16 gebildet, die auch in einem der Sensoren 8, 18 integriert sein kann.

Bei dieser zweiten Ausführungsform der Fig. 6 bis 8 mit axial hintereinanderliegender Anordnung kann der Zusatz-Sensor 18 auch schwenkbar gegenüber dem Haupt-Sensor 8 sein, d. h. mit relativer Verstellung der Sensoren 8,18 gegeneinander, wozu dann wiederum eine Verstelleinrichtung 10 vorgesehen sein kann.

Die Ausführungsformen der Fig. 1 bis 8 können somit wie gezeigt bei einem Sagging als abgeflachter unterer Bereich oder auch mit zwei seitlichen unteren Bereichen eingesetzt werden; es können aber auch andere Verformungen oder Deplatzierungen der Innenfläche 1b, z.B. eine Exzentrizität der Innenfläche 1b mit versetztem Mittelpunkt bzw. versetzter Rohrachse, oder allgemein eine Ovalität als nicht-runde Ausbildung ermittelt werden.

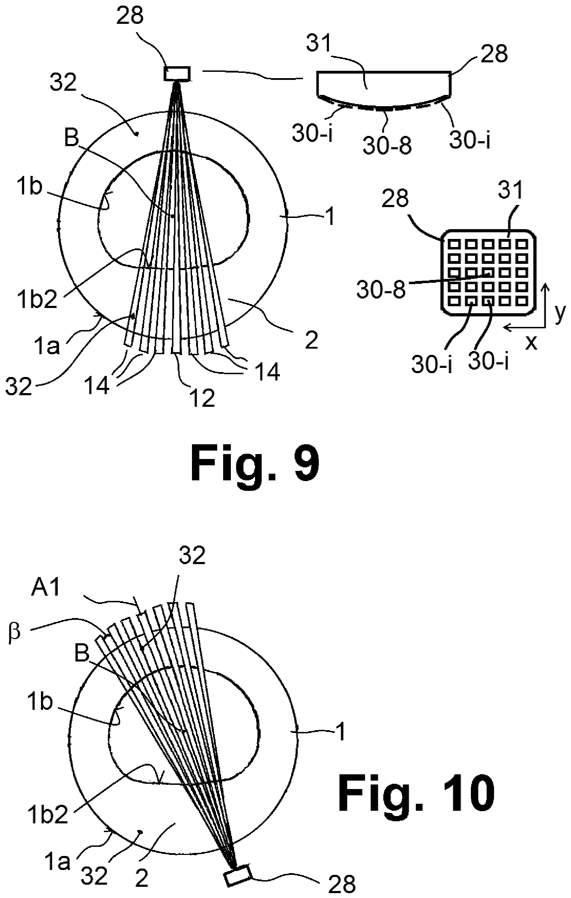

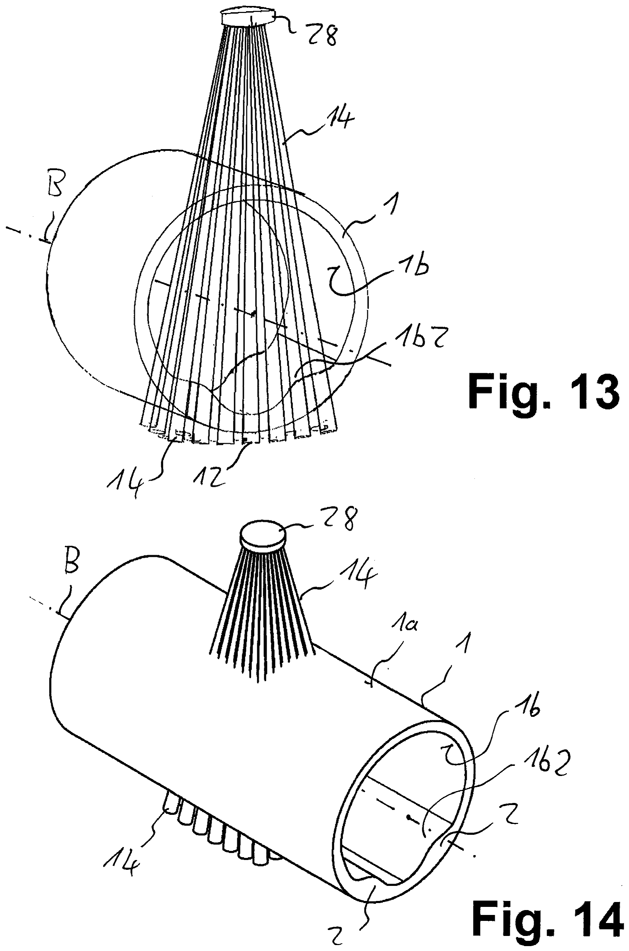

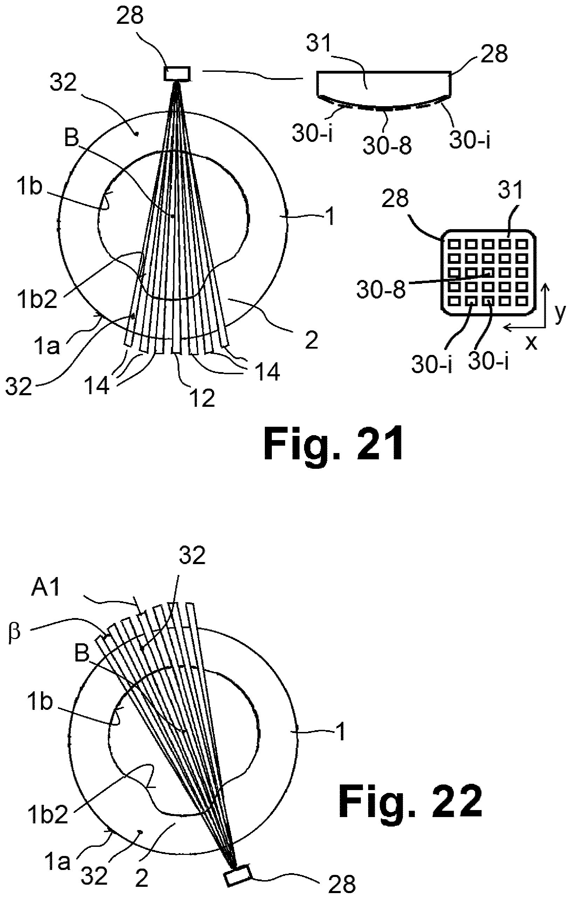

Gemäß der dritten Ausführungsform der Fig. 9 bis 14 und entsprechend auch Fig. 21, 22 ist eine THz-Array-Messvorrichtung 28 vorgesehen, die als Sensoren ein Array bzw. eine Anordnung einzelner THz-Transceiver 30-8, 30-i auf einen konvexen Träger 31 bzw. in konvexer Anordnung aufweist, so dass die optischen Achsen A1 der einzelnen THz-Transceiver 30-8, 30-i divergieren. Vorzugsweise sind die THz-Transceiver 30-8, 30-i in einem zweidimensionalen Array, d.h. z.B. einem xy-Koordinatensystem angeordnet. Die THz-Array-Messvorrichtung 28 rotiert wiederum um das Rohr 1 und misst mit ihren einzelnen THz-Transceivern 30-8, 30-i jeweils in oben beschriebener Weise durch Aussenden von THz-Strahlung und Laufzeitmessungen.

Hierbei ist z. B. ein mittlerer THz-Transceiver 30-8 als Haupt-Sensor mittig auf die Rohrachse B und somit senkrecht zu der Außenfläche 1a und Innenfläche 1b ausgerichtet, hingegen die weiteren THz-Transceiver 30-i demgegenüber divergent als Zusatz-Sensoren, so dass sie - entsprechend der obigen Ausführungsform der Fig. 2 - jeweils bei ordnungsgemäßer Ausbildung des Rohres 1 kein Messsignal liefern, jedoch die Sagging-Fläche 1b2 teilweise erfassen können.

Die Darstellungen der Fig. 9 und 10 entsprechen hierbei wiederum den Darstellungen der Fig. 21, 22, bei denen - beispielhaft -seitliche untere Sagging-Bereiche in dem Rohr 1 vorliegen.

Insbesondere bei dieser dritten Ausführungsform kann vorteilhafterweise weiterhin auch eine Fehlstelle 32 bzw. Lunker 32 an einer Fläche 1a, 1b oder wie gezeigt in der Wand detektiert werden. In Fig. 9 kann somit die untere, in Fig. 10 die obere Fehlstelle 32 detektiert werden. Die Fehlstelle 32 kann z.B. ein Lufteinschluss sein, oder der Einschluss verbrannten Materials. Hierbei können auch Fehlstellen 32 detektiert werden, die keinen Reflexionspeaks genau senkrecht zurückwerfen, aber in einer anderen Richtung, z.B. Metallsplitter usw. So können Reflexionen in der Wand bereits aus der Laufzeit als Fehler im Material erkannt werden. Weiterhin sind Fehlstellen 32 im Allgemeinen in Längsrichtung, d.h. entlang der Rohrachse B, begrenzt; hingegen zeigen großflächige Verformungen wie Sagging, Exzentritzität usw. ein derartiges Messsignal über einen größeren Bereich, so dass ein Vergleich der Messungen in x-Richtung bzw. entlang B für eine Unterscheidung herangezogen werden kann.

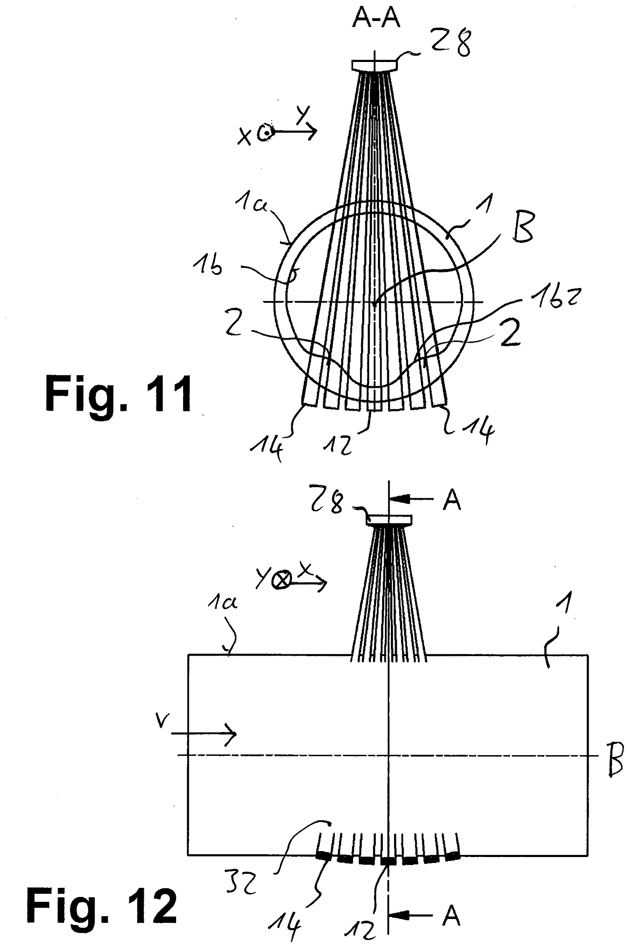

Weiterhin kann gemäß Fig. 12 - insbesondere bei dem zweidimensionalen Array 28 mit in beiden Richtungen bzw. Dimensionen konvexer oder divergenter Ausbildung - nicht nur eine Vermessung in der jeweiligen Detektionsebene senkrecht zur Rohrachse B erfolgen, die somit die Schnittebene A-A der Fig. 11 ist, sondern über einen oder mehrere Zusatz-Sensoren 30-i auch eine Vermessung enttang der Rohrachse B, d.h. in der Förderrichtung v und entgegen der Förderrichtung v, d.h.in Förderrichtung v rückwärts.

Somit können mit einem oder mehreren Zusatz-Sensoren 30-i auch Bereiche des Rohres 1 oder allgemein eines geförderten Messobjektes außerhalb einer einzigen Detektionsebene erfasst werden, und insbesondere bevor diese Materialbereiche unter den mittleren THz- Haupt-Sensor 30-8 der Haupt-Detektionsebene A-A gelangen. Dies ist insbesondere auch bei anisotropen Fehlstellen 32 wie z.B. Metallsplittern hilfreich, die somit auch mehreren Richtungen detektiert und erfasst werden können, wodurch die Wahrscheinlichkeit und Qualität der Erfassung deutlich gesteigert werden kann.

Die Anordnungen der mehreren THz-Sensoren, d.h. eines Haupt-Sensors 8 und eines Zusatz-Sensors 9, und insbesondere die zweidimensionale THz-Array-Messvorrichtung 28 mit einem Haupt-Sensor 30-8 und mehreren Zusatz-Sensoren 30-i, kann weiterhin für eine Aktiv-Passiv-Messung herangezogen werden, bei der ein THz-Sensor, z.B. der Haupt-Sensor 30-8 aktiv ist und einen THz-Hauptstrahl 12 aussendet und die Zusatz-Sensoren 30-i passiv sind und lediglich an dem Messobjekt 1 reflektierte THz-Strahlung aufnehmen. Hierbei kann die Funktion des aktiven und passiven Sensors bzw. Sensors auch durchwechseln.

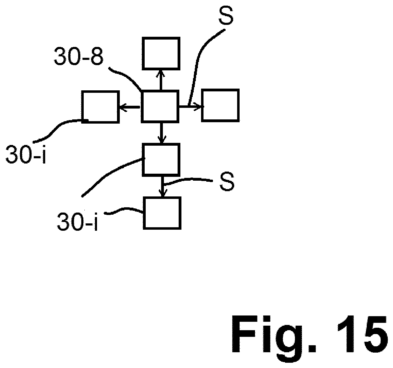

Hierbei nehmen gemäß der schematischen Darstellung der Fig. 15 die passiven Terahertz-Empfangseinheiten, d.h. z.B. die Zusatz-Sensoren 30-i, ein Synchronisierungssignal S auf, das den Sendezeitpunkt der Terahertz-Strahlung der aktiven Einheit, z.B. des Haupt-Sensors 30-8, festlegt.

Vorteilhafterweise ermittelt die Auswerte- und Steuereinrichtung 16 aus der reflektierten; detektierten Terahertz- Strahlung und dem Synchronisationssignal S eine Laufzeit und einen Abstand, insbesondere mittels gespeicherter geometrische Daten oder Abstandsdaten über die Anordnung des THz-Zusatz-Sensors 9, 18, 19, 30-i und des THz-Haupt-Sensors 8, 30-8, z.B. der Position und Ausrichtung ihrer optischen Achse sowie der Position und Ausrichtung der optischen Achsen. Derartige geometrische Daten können vorab durch Messung, insbesondere aber auch durch eine Kalibrierung an einem ersten Messobjekt festgelegt werden, sodass sie nachfolgend zur Auswertung herangezogen werden können.

Die Figuren 1 bis 11 und 16 bis 22 zeigen hierbei jeweils Schnitte in einer Detektionsebene A-A, die somit dem Schnitt A-A der Fig. 12 entspricht

### Bezugszeichenliste

- 1: Rohr als Messobjekt
- 1a: Außenfläche
- 1b: Innenfläche
- 1b2: Sagging-Fläche, verformte Innefläche
- 2: innere Wanddicken- Verformung, z.B. Sagging-Bereich
- 4: THz-Transceiver als einzelner Sensor
- 4a: erste (obere) Stellung des THz-Transceivers als einzelner Sensor
- 4b: zweite (untere) Stellung des THz-Transceivers als einzelner Sensor
- 5: vorderer Wandbereich
- 6: hinterer Wandbereich
- 7: THz-Messvorrichtung
- 8: Haupt-Sensor der THz-Messvorrichtung 7
- 9: Zusatz-Sensor der THz-Messvorrichtung 7

- 10: Verstelleinrichtung
- 11: Verstell-Spiegel
- 12: Haupt-Strahl
- 14: Zusatz-Strahl
- 16: Auswerte- und Steuereinrichtung
- 18: Zusatz-Sensor
- 19: Zusatz-Sensor

- 28: THz-Array-Messvorrichtung
- 30-8: mittlerer THz-Transceiver als Haupt- Sensor der THz-Array-Messvorrichtung 28
- 30-i: weitere THz-Transceiver als Zusatz- Sensor der THz-Array-Messvorrichtung 28
- 31: Träger der THz-Array-Messvorrichtung 28

- A1: erste optische Achse des Hauptstrahls 12
- A2: zweite optische Achse des Zusatz-Strahls 14

- A-A: Detektionsebene, beispielhaft in Fig. 11,12 dargestellt

- α: variabler Sensorwinkel
- β: fester Sensorwinkel

- P1, 2, 3, 4, 9: Reflexionspeaks
- B: Symmetrieachse, Rohrachse

- S: Synchronisationssignal

- S-a, S-b: Signalamplitude des Transceivers 4 der Figur 1 und 16
- S1: erste Signalamplitude
- S2: zweite Signalamplitude

## Patentansprüche

1. THz-Messvorrichtung (7, 28) zum Messen mindestens einer Wanddicke (d) eines eine Innenfläche (1b) und eine Außenfläche (1a) aufweisenden Wandbereichs (5, 6) eines rohrförmigen Messobjektes (1), wobei die THz-Messvorrichtung (7, 28) aufweist:
einen THz-Haupt-Sensor (8, 30-8) zum Aussenden eines THz-Hauptstrahls (12) entlang einer ersten optischen Achse (A1) durch eine Symmetrieachse (B) des Messobjektes (1) und zum Empfangen von an der Außenfläche (1a) und der Innenfläche (1b) entlang der ersten optischen Achse (A1) reflektierter THz-Strahlung,
einen THz-Zusatz-Sensor (9, 18, 19, 30-i) zum Aussenden eines THz-Zusatz-Strahls (14) entlang einer zweiten optischen Achse (A2), die gegenüber der ersten optischen Achse (A1) um einen Sensorwinkel (α, β) verstellt ist und zumindest zeitweise während des Messverfahrens nicht durch die Symmetrieachse (B) verläuft, und zur Detektion des entlang der zweiten optischen Achse (A2) zurück reflektierten THZ-Zusatz-Strahls (14),
eine Auswerte- und Steuereinrichtung (16), die eingerichtet ist, eine erste Signalamplitude (S1) des THz-Haupt-Sensors (8, 30-8) und eine zweite Signalamplitude (S2) des THz-Zusatz-Sensors (9, 18, 19, 30-i) aufzunehmen und Reflexionspeaks in den Signalamplituden (S1, S2) zu ermitteln, **dadurch gekennzeichnet, dass** die Auswerte- und Steuereinrichtung (16) ferner eingerichtet ist,
eine innere Wanddicken- Verformung (2) zu detektieren, wenn sie
- in der ersten Signalamplitude (S1) einen äußeren Reflexionspeak (P1) der Außenfläche (1a) des Wandbereichs (5, 6) ohne den inneren Reflexionspeak der Innenfläche (1b) des Wandbereichs (5, 6) ermittelt, und
- in der zweiten Signalamplitude (S2) einen inneren Reflexionspeak (P2) der Innenfläche (1b) des Wandbereichs (5, 6) ermittelt.

2. THz-Messvorrichtung (7, 28) nach Anspruch 1, **dadurch gekennzeichnet, dass** sie eingerichtet ist, den THz-Hauptstrahl (12) und den THZ-Zusatz-Strahl (14) durch einen vorderen Wandbereich (5) und hinteren Wandbereich (6) des Messobjektes (1) zu senden, wobei die Auswerte- und Steuereinrichtung (16) eingerichtet ist, eine innere Wanddicken- Verformung (2) zu detektieren, wenn sie
- in der ersten Signalamplitude (S1) einen vorderen äußeren Reflexionspeak des vorderen Wandbereichs (5) und einen hinteren äußeren Reflexionspeak des hinteren Wandbereichs (6) und lediglich einen einzigen inneren Reflexionspeak an einer Innenfläche (1b) ermittelt, und
- in der zweiten Signalamplitude (S2) einen weiteren inneren Reflexionspeak (P2) ermittelt.

3. THz-Messvorrichtung (7, 28) nach Anspruch 1 oder 2, **dadurch gekennzeichnet, dass** die Auswerte- und Steuereinrichtung (16) eingerichtet ist, die Wanddicken-Verformung als Sagging-Bereich (2) zu ermitteln, wenn sie in der zweiten Signalamplitude (S2) den weiteren Reflexionspeak (P2) in einem unteren und/oder seitlichen Bereich der Innenfläche (1b) des Messobjektes (1) ermittelt.

4. THz-Messvorrichtung (7, 28) nach einem der vorherigen Ansprüche, **dadurch gekennzeichnet, dass** sie eine von der Auswerte- und Steuereinrichtung (16) angesteuerte Verstelleinrichtung zum gemeinsamen Schwenken der Sensoranordnung aus dem Haupt-Sensor (8, 30-8) und dem Zusatz-Sensor (9, 18, 19, 30-i) in mehrere Messwinkelpositionen aufweist, vorzugsweise vollumfänglich und/oder in einer geschlossenen Umfangsbahn, insbesondere um das Messobjekt (1) herum.

5. THz-Messvorrichtung (7) nach einem der vorherigen Ansprüche, **dadurch gekennzeichnet, dass** sie eine von der Auswerte- und Steuereinrichtung (16) angesteuerte relative Verstelleinrichtung (10) zum Verstellen der zweiten optischen Achse (A2) des THz-Zusatzsensors (9) relativ zu der ersten optischen Achse (A1) des Haupt-Sensors (8) in mehrere, vorzugsweise kontinuierlich geänderte variable Sensorwinkel (α) aufweist.

6. THz-Messvorrichtung (7, 28) nach einem der Ansprüche 1 bis 4, **dadurch gekennzeichnet, dass** die zweite optische Achse (A2) des mindestens einen THz-Zusatz-Sensors (9, 30-i) unter einem festen Sensorwinkel (β) gegenüber der ersten optischen Achse (A1) des Haupt-Sensors (8, 30-8) eingestellt ist.

7. THz-Messvorrichtung (7, 28) nach einem der vorherigen Ansprüche, **dadurch gekennzeichnet, dass** der THz-Haupt-Sensor (8, 30-8) und der THZ-Zusatz-Sensor (9, 18, 19, 30-i) in Umfangsrichtung nebeneinander und/oder in Axialrichtung (B) hintereinander angeordnet sind.

8. THz-Messvorrichtung (28) nach Anspruch 6 oder 7, **dadurch gekennzeichnet, dass** mehrere THz-Zusatzsensoren (30-i) zusammen mit dem THz-Haupt-Sensor (30-8) in einer THz-Array-Anordnung angeordnet sind, deren optische Achsen (A1) fest zu einander, vorzugsweise divergent zueinander, angeordnet sind.

9. THz-Messvorrichtung (28) nach Anspruch 8, **dadurch gekennzeichnet, dass** die THz-Array-Anordnung eine zweidimensionale Anordnung aus THz-Sensoren (30-8, 30-i) ist, vorzugsweise auf einem Träger (31) mit einer konvexen Fläche, mit einem mittleren Haupt-Sensor (30-8) und umgebenden Zusatzsensoren (30-i).

10. THz-Messvorrichtung (7, 28) nach einem der vorherigen Ansprüche, **dadurch gekennzeichnet, dass** die Auswerte- und Steuereinrichtung (16) eingerichtet ist, eine Laufzeitmessung der ausgesandten THz-Strahlung des Haupt-Sensors (8, 30-8) und Zusatzsensors (9, 18, 19, 30-i) durchzuführen und aus den Reflexionspeaks (P1, P2, P3, P4) Abstände der Außenfläche (1a) oder Innenfläche (1b) zu ermitteln.

11. THz-Messvorrichtung (7, 28) nach einem der vorherigen Ansprüche, **dadurch gekennzeichnet, dass** die erste optische Achse (A1) des THz-Hauptstrahls (12) und die zweite optische Achse (A2) des THz-Zusatz-Strahls (14) in einer Detektionsebene (A-A) verlaufen, die senkrecht zu einer Symmetrieachse (B) ist, zur Vermessung des Messobjektes (1) in der Detektionsebene (A-A).

12. THz-Messvorrichtung (7, 28) nach einem der vorherigen Ansprüche, **dadurch gekennzeichnet, dass** die erste optische Achse (A1) des THz-Hauptstrahls (12) und die zweite optische Achse (A2) des THz-Zusatz-Strahls (14) zu der Symmetrieachse (B) oder einer Förderrichtung (v) zum Fördern des Messobjektes (1) geneigt oder schräg verlaufen, insbesondere aus einer Detektionsebene (A-A) heraus verlaufen, zur Vermessung entlang der Symmetrieachse (B) und/oder in der Förderrichtung (v) und/oder entgegen der Förderrichtung (v).

13. THz-Messvorrichtung (7, 28) nach einem der vorherigen Ansprüche, **dadurch gekennzeichnet, dass**
mindestens ein THz-Zusatz-Sensor (9, 18, 19, 30-i) eingerichtet ist, zumindest zeitweise passiv zu sein, während seine optische Achse (A2) zu der optischen Achse (A1) des sendenden THz-Haupt-Sensors (8, 30-8) versetzt oder geneigt angeordnet ist, und eine von dem THz-Haupt-Sensors (8, 30-8) ausgesandte und an dem Messobjekt (1) reflektierte Terahertz- Strahlung zu detektieren, und
die THz-Messvorrichtung (7, 28) eine Datenverbindung (10) zur Synchronisierung des THz-Zusatz-Sensors (9, 18, 19, 30-i) mit dem THz-Haupt-Sensor (8, 30-8) mittels eines Synchronisationssignals (S1) aufweist, wobei die Auswerte- und Steuereinrichtung (16) eingerichtet ist, aus der reflektierten; detektierten Terahertz- Strahlung (6b) und dem Synchronisationssignal (S1) eine zweite Laufzeit und einen Abstand zu ermitteln, insbesondere mittels gespeicherter geometrische Daten oder Abstandsdaten über die Anordnung des THz-Zusatz-Sensors (9, 18, 19, 30-i) und des THz-Haupt-Sensors (8, 30-8).

14. Messanordnung aus einer THz-Messvorrichtung (7, 28) nach einem der vorherigen Ansprüche und dem rohrförmigen Messobjekt (1).

15. THz-Messverfahren zum Vermessen mindestens einer Wanddicke (d) eines eine Innenfläche (1b) und eine Außenfläche (1a) aufweisenden Wandbereichs (5, 6) eines rohrförmigen Messobjektes (1), mit mindestens folgenden Schritten:
- Aussenden eines THz-Hauptstrahls (12) von einem THz-Haupt-Sensor (8, 30-8) entlang einer ersten optischen Achse durch die Symmetrieachse (B) des Messobjektes (1), Detektion der entlang der ersten optischen Achse (A1) reflektierten THz-Strahlung als erste Signalamplitude (S1) und Ermittlung von Reflexionspeaks in der ersten Signalamplitude (S1),
- Aussenden eines THz-Zusatzstrahls (14) von einem THz-Zusatzsensor (9, 18, 19, 30-i) entlang einer zweiten optischen Achse (A2), die zumindest zeitweise während des Messverfahrens nicht durch die Symmetrieachse (B) des Messobjektes (1) verläuft, und Detektieren von entlang der zweiten optischen Achse (A2) reflektierter THz-Strahlung als zweite Signalamplitude (S2),
- Ermitteln mindestens einer Wanddicke (d) aus der ersten Signalamplitude
und, **dadurch gekennzeichnet, dass** das THz-Messverfahren ferner die folgenden Schritte umfasst:
- Ermitteln einer inneren Wanddicken- Verformung (2), wenn
= in der ersten Signalamplitude (S1) ein äußerer Reflexionspeak (P1) der Außenfläche (1a) des Wandbereichs (5, 6) ohne den inneren Reflexionspeak der Innenfläche (1b) des Wandbereichs (5, 6) vorliegt, und
= in der zweiten Signalamplitude (S2) ein innerer Reflexionspeak (P2) der Innenfläche (1b) des Wandbereichs (5, 6) vorliegt.

16. Verfahren nach Anspruch 15, **dadurch gekennzeichnet, dass** der THz-Haupt-Sensor (8, 30-8) und der THZ-Zusatzsensor (9, 18, 19, 30-i) vollumfänglich um das Messobjekt (1) herum geschwenkt werden und kontinuierlich Haupt-Messungen entlang der ersten optischen Achse (1) durch die Symmetrieachse (B) des Messobjektes (1) durchgeführt werden.

17. Verfahren nach Anspruch 15 oder 16, **dadurch gekennzeichnet, dass** eine Sagging-Fläche (1b2) detektiert wird, wenn
- der THz-Hauptstrahl (12) in einen Messwinkel-Bereich um eine vertikale Richtung herum ausgesandt wird,
- in der ersten Signalamplitude untere und obere Signalpeaks der Außenfläche (1a) und ein oberer Signalpeak der Innenfläche (1b), aber zumindest in der vertikalen Richtung kein unterer Signalpeak (P2) der Innenfläche (1b) ermittelt wird, und
- in dem THz-Zusatzstrahl (9, 18, 19, 30-i) in dem Messwinkel-Bereich ein Reflexionspeak (P2) ermittelt wird..

18. Verfahren nach einem der Ansprüche 15 bis 17, **dadurch gekennzeichnet, dass** das Messobjekt (1) fortlaufend mit einer Fördergeschwindigkeit entlang seiner Symmetrieachse (B) befördert wird, z. B. nach der Extrusion des rohrförmigen Messobjektes (1), und die Messvorrichtung aus dem THz-Haupt-Sensor (8, 30-8) und dem mindestens einen THz-Zusatz-sensor (9, 18, 19, 30-i) fortlaufend um das Messobjekt (1) herumgeschwenkt wird.

## Claims

1. THz measurement device (7, 28) for measuring at least one wall thickness (d) of a wall region (5, 6), which has an inner face (1b) and an outer face (1a), of a tubular measurement object (1), wherein the THz measurement device (7, 28) has:
a main THz sensor (8, 30-8) for transmitting a main THz beam (12) along a first optical axis (A1) through an axis of symmetry (B) of the measurement object (1) and for receiving THz radiation which is reflected on the outer face (1a) and the inner face (1b) along the first optical axis (A1),
an additional THz sensor (9, 18, 19, 30-i) for transmitting an additional THz beam (14) along a second optical axis (A2) which is displaced with respect to the first optical axis (A1) through a sensor angle (α, β) and which at least temporarily during the measurement method does not extend through the axis of symmetry (B), and for detecting the additional THz beam (14) which is reflected back along the second optical axis (A2),
an evaluation and control device (16) which is configured to receive a first signal amplitude (S1) of the main THz sensor (8, 30-8) and a second signal amplitude (S2) of the additional THz sensor (9, 18, 19, 30-i) and to establish reflection peaks in the signal amplitudes (S1, S2),
**characterised in that** the evaluation and control device (16) is further configured to detect an inner wall thickness deformation (2) when
- it establishes in the first signal amplitude (S1) an external reflection peak (P1) of the outer face (1a) of the wall region (5, 6) without the internal reflection peak of the inner face (1b) of the wall region (5, 6) and
- it establishes in the second signal amplitude (S2) an internal reflection peak (P2) of the inner face (1b) of the wall region (5, 6).

2. THz measurement device (7, 28) according to claim 1, **characterised in that** it is configured to transmit the main THz beam (12) and the additional THz beam (14) through a front wall region (5) and rear wall region (6) of the measurement object (1), wherein the evaluation and control device (16) is configured to detect an inner wall thickness deformation (2) when
- it establishes in the first signal amplitude (S1) a front external reflection peak of the front wall region (5) and a rear external reflection peak of the rear wall region (6) and only a single internal reflection peak on an inner face (1b), and
- it establishes in the second signal amplitude (S2) another internal reflection peak (P2).

3. THz measurement device (7, 28) according to claim 1 or 2, **characterised in that** the evaluation and control device (16) is configured to establish the wall thickness deformation as a sagging region (2) when it establishes in the second signal amplitude (S2) the additional reflection peak (P2) in a lower and/or lateral region of the inner face (1b) of the measurement object (1).

4. THz measurement device (7, 28) according to any one of the preceding claims, **characterised in that** it has a displacement device which is controlled by the evaluation and control device (16) for common pivoting of the sensor arrangement comprising the main sensor (8, 30-8) and the additional sensor (9, 18, 19, 30-i) into a plurality of measurement angle positions, preferably completely circumferentially and/or in a closed peripheral path, in particular about the measurement object (1).

5. THz measurement device (7) according to any one of the preceding claims, **characterised in that** it has a relative displacement device (10) which is controlled by the evaluation and control device (16) for displacing the second optical axis (A2) of the additional THz sensor (9) relative to the first optical axis (A1) of the main sensor (8) into a plurality of preferably continuously changed variable sensor angles (α).

6. THz measurement device (7, 28) according to any one of claims 1 to 4, **characterised in that** the second optical axis (A2) of the at least one additional THz sensor (9, 30-i) is adjusted at a fixed sensor angle (β) relative to the first optical axis (A1) of the main sensor (8, 30-8).

7. THz measurement device (7, 28) according to any one of the preceding claims, **characterised in that** the main THz sensor (8, 30-8) and the additional THz sensor (9, 18, 19, 30-i) are arranged in a peripheral direction beside each other and/or in an axial direction (B) one behind the other.

8. THz measurement device (28) according to claim 6 or 7, **characterised in that** a plurality of additional THz sensors (30-i) are arranged together with the main THz sensor (30-8) in a THz array arrangement, the optical axes (A1) of which are arranged in a fixed manner relative to each other, preferably in a divergent manner relative to each other.

9. THz measurement device (28) according to claim 8, **characterised in that** the THz array arrangement is a two-dimensional arrangement of THz sensors (30-8, 30-i), preferably on a carrier (31) with a convex face, having a central main sensor (30-8) and surrounding additional sensors (30-i) .

10. THz measurement device (7, 28) according to any one of the preceding claims, **characterised in that** the evaluation and control device (16) is configured to carry out a running time measurement of the transmitted THz radiation of the main sensor (8, 30-8) and the additional sensor (9, 18, 19, 30-i) and to establish from the reflection peaks (P1, P2, P3, P4) spacings of the outer face (1a) or inner face (1b).

11. THz measurement device (7, 28) according to any one of the preceding claims, **characterised in that** the first optical axis (A1) of the main THz beam (12) and the second optical axis (A2) of the additional THz beam (14) extend in a detection plane (A-A) which is perpendicular to an axis of symmetry (B) in order to measure the measurement object (1) in the detection plane (A-A).

12. THz measurement device (7, 28) according to any one of the preceding claims, **characterised in that** the first optical axis (A1) of the main THz beam (12) and the second optical axis (A2) of the additional THz beam (14) extend in an inclined or oblique manner relative to the axis of symmetry (B) or a conveying direction (v) for conveying the measurement object (1), in particular extend out of a detection plane (A-A), for measurement along the axis of symmetry (B) and/or in the conveying direction (v) and/or counter to the conveying direction (v).

13. THz measurement device (7, 28) according to any one of the preceding claims, **characterised in that**
at least one additional THz sensor (9, 18, 19, 30-i) is configured to be at least temporarily passive whilst the optical axis (A2) thereof is arranged in an offset or inclined manner relative to the optical axis (A1) of the transmitting main THz sensor (8, 30-8) and to detect a terahertz radiation which is transmitted from the main THz sensor (8, 30-8) and which is reflected on the measurement object (1), and
the THz measurement device (7, 28) has a data link (10) for synchronisation of the additional THz sensor (9, 18, 19, 30-i) with the main THz sensor (8, 30-8) by means of a synchronisation signal (S1), wherein the evaluation and control device (16) is configured to establish from the reflected, detected terahertz radiation (6b) and the synchronisation signal (S1) a second running time and a spacing, in particular by means of stored geometric data or spacing data via the arrangement of the additional THz sensor (9, 18, 19, 30-i) and the main THz sensor (8, 30-8).

14. Measurement arrangement comprising a THz measurement device (7, 28) according to any one of the preceding claims and the tubular measurement object (1).

15. THz measurement method for measuring at least one wall thickness (d) of a wall region (5, 6), which has an inner face (1b) and an outer face (1a), of a tubular measurement object (1), having at least the following steps:
- transmitting a main THz beam (12) from a main THz sensor (8, 30-8) along a first optical axis through the axis of symmetry (B) of the measurement object (1), detecting the THz radiation which is reflected along the first optical axis (A1) as a first signal amplitude (S1) and establishing reflection peaks in the first signal amplitude (S1),
- transmitting an additional THz beam (14) from an additional THz sensor (9, 18, 19, 30-i) along a second optical axis (A2) which at least temporarily during the measurement method does not extend through the axis of symmetry (B) of the measurement object (1), and detecting THz radiation which is reflected along the second optical axis (A2) as a second signal amplitude (S2),
- establishing at least one wall thickness (d) from the first signal amplitude
and **characterised in that** the THz measurement method further comprises the following steps:
- establishing an inner wall thickness deformation (2) when
= in the first signal amplitude (S1) an external reflection peak (P1) of the outer face (1a) of the wall region (5, 6) is present without the internal reflection peaks of the inner face (1b) of the wall region (5, 6) and,
= in the second signal amplitude (S2) an internal reflection peak (P2) of the inner face (1b) of the wall region (5, 6) is present.

16. Method according to claim 15, **characterised in that** the main THz sensor (8, 30-8) and the additional THz sensor (9, 18, 19, 30-i) are pivoted completely circumferentially about the measurement object (1) and main measurements are carried out continuously along the first optical axis (1) through the axis of symmetry (B) of the measurement object (1).

17. Method according to claim 15 or 16, **characterised in that** a sagging face (1b2) is detected when
- the main THz beam (12) is transmitted in a measurement angle range about a vertical direction,
- in the first signal amplitude lower and upper signal peaks of the outer face (1a) and an upper signal peak of the inner face (1b), but at least in the vertical direction no lower signal peak (P2) of the inner face (1b) is established, and
- in the additional THz beam (9, 18, 19, 30-i) a reflection peak (P2) is established in the measurement angle range.

18. Method according to any one of claims 15 to 17, **characterised in that** the measurement object (1) is conveyed continuously along the axis of symmetry (B) thereof at a conveying speed, for example, after the extrusion of the tubular measurement object (1), and the measurement device comprising the main THz sensor (8, 30-8) and the at least one additional THz sensor (9, 18, 19, 30-i) is continuously pivoted about the measurement object (1).

## Revendications

1. Dispositif de mesure térahertz (7,28) servant à mesurer au moins une épaisseur de paroi (d) d'une partie de paroi (5, 6) présentant une surface interne (1b) et une surface externe (1a) d'un objet à mesurer de forme tubulaire (1), le dispositif THz (7, 28) présentant :
un capteur THz principal (8, 30-8) servant à émettre un rayon principal THz (12) le long d'un premier axe optique (A1) à travers un axe de symétrie (B) de l'objet à mesurer (1) et à recevoir un rayonnement THz réfléchi sur la surface externe (1a) et la surface interne (1b) le long du premier axe optique (A1),
un capteur THz complémentaire (9, 18, 19, 30-1) servant à émettre un rayon THz complémentaire (14) le long d'un second axe optique (A2) qui est décalé par rapport au premier axe optique (A1) d'un angle de capteur (α, β) et ne s'étend pas à travers l'axe de symétrie au moins temporairement au cours de la procédure de mesure, ainsi qu'à détecter le rayon THz complémentaire (14) réfléchi le long du second axe optique (A2),
un dispositif d'évaluation et de commande (16) qui est conçu pour enregistrer une première amplitude de signal (S1) du capteur THz principal (8, 30-8) et une seconde amplitude de signal (S2) du capteur THZ complémentaire (9, 18, 19, 30-i) et pour déterminer des pics de réflexion dans les amplitudes de signal (S1, S2), **caractérisé en ce que** le dispositif d'évaluation et de commande (16) est conçu en plus pour détecter une déformation d'épaisseur de paroi (2) dans le cas où il
- détermine dans la première amplitude de signal (S1), un pic de réflexion externe (P1) de la surface externe (1a) de la partie de paroi (5, 6) sans le pic de réflexion interne de la surface interne (b) de la partie de paroi (5, 6), et dans le cas où il
- détermine dans la seconde amplitude de signal (S2), un pic de réflexion interne (P2) de la surface interne (1b) de la partie de paroi (5, 6).

2. Dispositif de mesure térahertz (7,28) suivant la revendication 1, **caractérisé en ce qu'**il est conçu pour émettre le rayon THz principal (12) et le rayon THz complémentaire (14) à travers une partie de paroi avant (5) et une partie de paroi arrière (6) de l'objet à mesurer (1), le dispositif d'évaluation et de commande (16) étant conçu pour détecter une déformation d'épaisseur de paroi (2) dans le cas où il
- détermine dans la première amplitude de signal (S1), un pic de réflexion externe avant de la partie de paroi avant (5) et un pic de réflexion externe arrière de la partie de paroi arrière (6) et seulement un pic de réflexion sur une surface interne (1b) et dans le cas où il
- détermine dans la seconde amplitude de signal (S2) un autre pic de réflexion interne (P2).

3. Dispositif de mesure térahertz (7,28) suivant la revendication 1, **caractérisé en ce que** le dispositif d'évaluation et de commande (16) est conçu pour déterminer la déformation d'épaisseur de paroi comme zone de fléchissement (2) dans le cas où il détermine dans la seconde amplitude de signal (S2), l'autre pic de réflexion (P2) dans une zone inférieure et/ou latérale de la surface interne (1b) de l'objet à mesurer (1).

4. Dispositif de mesure térahertz (7,28) suivant une des revendications précédentes, **caractérisé en ce qu'il** présente un système de réglage commandé par le dispositif d'évaluation et de commande (16) et servant à pivoter conjointement l'agencement de capteurs composé du capteur principal (8, 3,0-8) et du capteur complémentaire (9, 18, 19, 30-i) en plusieurs positions de mesure angulaires, de préférence sur toute la circonférence et/ou en une trajectoire circonférentielle fermée entourant en particulier l'objet à mesurer (1).

5. Dispositif de mesure térahertz (7,28) suivant la revendication 1, **caractérisé en ce qu'**il présente un système de réglage relatif (10) commandé par le dispositif d'évaluation et de commande (16) et servant au réglage du second axe optique (A2) du capteur THz complémentaire (9) par rapport au premier axe optique (A1) du capteur principal (8) en plusieurs angles de capteur variables α qui sont de préférence modifiés continuellement.

6. Dispositif de mesure térahertz (7,28) suivant une des revendications 1 à 4, **caractérisé en ce que** le second axe optique (A2) de l'au moins un capteur THz complémentaire (9, 30-i) est réglé selon un angle de capteur (β) fixe par rapport au premier axe optique (A1) du capteur principal (8, 30-8).

7. Dispositif de mesure térahertz (7,28) suivant une des revendications précédentes, **caractérisé en ce que** le capteur THz principal (8, 30-8) et le capteur THZ complémentaire (9, 18, 19, 30-i) sont disposés côte à côté dans la direction circonférentielle et/ou l'un derrière l'autre dans la direction axiale (B).

8. Dispositif de mesure térahertz (28) suivant la revendication 6 ou 7, **caractérisé en ce que** plusieurs capteurs THz complémentaires (30-i) et le capteur THz principal (30-8) sont regroupés en un agencement, dont les axes optiques (A1) sont disposés de manière fixe l'un par rapport à l'autre, de préférence de manière divergente l'un par rapport à l'autre.

9. Dispositif de mesure térahertz (28) suivant la revendication 8, **caractérisé en ce que** l'agencement THz est un agencement bidimensionnel de capteurs THz (30-8, 30-i), de préférence sur un support (31) avec une surface convexe, composé d'un capteur principal central (30-8) et de capteurs complémentaires (30-i) qui l'entourent.

10. Dispositif de mesure térahertz (7,28) suivant une des revendications précédentes, **caractérisé en ce que** le dispositif d'évaluation et de commande (16) est conçu pour effectuer une mesure de la durée du rayonnement THz émis par le capteur principal (8, 30-8) et le capteur complémentaire (9, 18, 19, 30-i) et pour déterminer à partir des pics de réflexion (P1, P2, P3, P4) des écarts de la surface externe (1a) ou de la surface interne (1b).

11. Dispositif de mesure térahertz (7,28) suivant une des revendications précédentes, **caractérisé en ce que** le premier axe optique (A1) du rayon THz principal (12) et le second axe optique (A2) du rayon THz complémentaire (14) s'étendent sur un plan de détection (A-A) qui est perpendiculaire à un axe de symétrie (B) pour la mesure de l'objet à mesurer (1) sur le plan de détection (A-A).

12. Dispositif de mesure térahertz (7,28) suivant une des revendications précédentes, **caractérisé en ce que** le premier axe optique (A1) du rayon THz principal (12) et le second axe optique (A2) du rayon THz complémentaire s'étendent de manière inclinée ou oblique par rapport à l'axe de symétrie (B) ou une direction de transport (v) pour transporter l'objet à mesurer (1) et s'étendent en particulier à partir d'un plan de détection (A-A) pour une mesure le long de l'axe de symétrie (B) et/ou dans la direction de transport (v) et/ou à l'encontre de la direction de transport (v).

13. Dispositif de mesure térahertz (7,28) suivant une des revendications précédentes, **caractérisé en ce qu'**au moins un capteur THz complémentaire (9, 18, 19, 30-i) est conçu pour être passif au moins temporairement pendant que son axe optique (A2) est disposé de manière décalé ou oblique par rapport à l'axe optique (A1) du capteur THz principal (8, 30-8) émettant et pour détecter un rayonnement térahertz émis par le capteur THz principal (8, 30-8) et réfléchi sur l'objet à mesurer (1), et le dispositif de mesure THz (7, 28) présente une liaison de données (10) pour la synchronisation du capteur THz complémentaire (9, 18, 19, 30-i) avec le capteur THz principal (8, 30-8) au moyen d'un signal de synchronisation (S1), le dispositif d'évaluation et de commande (16) étant conçu pour déterminer à partir du rayonnement térahertz réfléchi détecté (6b) et du signal de synchronisation (S1) une seconde durée et un écart, en particulier au moyen de données géométriques ou de données d'écart mémorisées relatives à la disposition du capteur THz complémentaire (9, 18, 19, 30-i) et du capteur THz principal (8, 30-8).

14. Agencement de mesure composé d'un dispositif de mesure THz (7,28) suivant une des revendications précédentes et de l'objet à mesurer de forme tubulaire (1).

15. Procédé de mesure THz servant à mesurer au moins une épaisseur de paroi (d) d'une partie de paroi (5, 6) présentant une surface interne (1b) et une surface externe (1a) d'un objet à mesurer de forme tubulaire (1), le procédé comprenant au moins les étapes suivantes :
- l'émission d'un rayon THz principal (12) par un capteur THz principal (8, 30-8) le long d'un premier axe optique à travers l'axe de symétrie (B) de l'objet à mesurer (1), la détection le long du premier axe optique (A1) du rayonnement THz) réfléchi comme première amplitude de signal (S1) et la détermination de pics de réflexion dans la première amplitude de signal (S1),
- l'émission d'un rayon THz complémentaire (14) par un capteur THz complémentaire (9, 18, 19, 30-1) le long d'un second axe optique (A2) qui ne s'étend pas à travers l'axe de symétrie (B) de l'objet à mesurer (1), au moins temporairement au cours du procédé de mesure, et la détection d'un rayonnement THz réfléchi le long du second axe optique (A2) comme seconde amplitude de signal (S2),
- la détermination d'au moins une épaisseur de paroi (d) à partir de la première amplitude de signal, et **caractérisé en ce que** le procédé de mesure THz comprend en plus les étapes suivantes :
- la détermination d'une déformation interne d'épaisseur de paroi (2) s'il y a
= dans la première amplitude de signal (S1), un pic de réflexion externe (P1) de la surface externe (1a) de la partie de paroi (5, 6) sans le pic de réflexion interne de la surface interne (1b) de la partie de paroi (5, 6) et, s'il y a
= dans la seconde amplitude de signal (S2), un pic de réflexion interne (P2) de la surface interne (1b) de la partie de paroi (5, 6).

16. Procédé suivant la revendication 15, **caractérisé en ce que** le capteur THz principal (8, 30-8) et le capteur THz complémentaire (9, 18, 19, 30-i) sont pivotés autour de toute la circonférence de l'objet à mesurer (1) et des mesures principales sont effectuées continuellement le long du premier axe optique (1) à travers l'axe de symétrie (B) de l'objet à mesurer (1).

17. Procédé suivant la revendication 15 ou 16, **caractérisé en ce qu'**une surface de fléchissement (1b2) est détectée, dans le cas où
- le rayon THz principal (12) est émis dans une plage d'angle de mesure autour d'une direction verticale,
- dans la première amplitude de signal, des pics de signal inférieurs et supérieurs de la surface externe (1a) et un pic de signal supérieur de la surface inférieure (1b) sont déterminés, mais aucun pic de signal inférieur (P2) de la surface interne (1b) n'est déterminé au moins dans la direction verticale de la surface interne (1b),
- dans le rayon THz complémentaire (9, 18, 19, 30-i), un pic de réflexion (P2) est déterminé dans la plage d'angle de mesure.

18. Procédé suivant la revendication 15 à 17, **caractérisé en ce que** l'objet à mesurer (1) est transporté continuellement avec une vitesse de transport le long de son axe de symétrie (B), par exemple après l'extrusion de l'objet à mesurer de forme tubulaire (1) et l'agencement de mesure composé du capteur THz principal (8, 30-8) et de l'au moins un capteur THz complémentaire (9, 18, 19, 30-i) est continuellement pivoté autour de l'objet à mesurer (1).
